(19) Europäisches Patentamt
European Patent Office
Office européen des brevets

(11) **EP 3 827 304 B1**

(12) **EUROPÄISCHE PATENTSCHRIFT**

(45) Veröffentlichungstag und Bekanntmachung des Hinweises auf die Patenterteilung:
**20.04.2022 Patentblatt 2022/16**

(21) Anmeldenummer: **19720128.8**

(22) Anmeldetag: **29.04.2019**

(51) Internationale Patentklassifikation (IPC):
**G02B 27/09** *(2006.01)* **G02B 7/02** *(2021.01)*
**G02B 3/04** *(2006.01)*

(52) Gemeinsame Patentklassifikation (CPC):
**G02B 27/0961; G02B 3/04; G02B 7/028; G02B 27/0966**

(86) Internationale Anmeldenummer:
**PCT/EP2019/060867**

(87) Internationale Veröffentlichungsnummer:
**WO 2020/020499 (30.01.2020 Gazette 2020/05)**

(54) **VORRICHTUNG ZUR KOLLIMATION EINES LICHTSTRAHLFELDES**

DEVICE FOR COLLIMATING A LIGHT BEAM FIELD

DISPOSITIF DE COLLIMATION D'UN CHAMP DE RAYON LUMINEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.07.2018 EP 18184916**

(43) Veröffentlichungstag der Anmeldung:
**02.06.2021 Patentblatt 2021/22**

(73) Patentinhaber: **Fisba AG**
**9016 St. Gallen (CH)**

(72) Erfinder:
• **MOSER, Hansruedi**
**9452 Hinterforst (CH)**

• **LANGENBACH, Eckhard**
**9037 Speicherschwendi (CH)**
• **SELM, Romedi**
**9300 Wittenbach (CH)**

(74) Vertreter: **Hepp Wenger Ryffel AG**
**Friedtalweg 5**
**9500 Wil (CH)**

(56) Entgegenhaltungen:
**EP-A2- 1 211 066         EP-A2- 3 267 233**
**DE-T2- 60 210 010         US-A- 4 318 594**
**US-A1- 2012 027 417**

**Beschreibung**

Die Erfindung betrifft eine Vorrichtung zur Kollimation eines Lichtstrahlfeldes, einen Diodenlaser, die Verwendung eines Kollimationslinsensystems, ein Verfahren zur Kollimation und ein Verfahren zum Herstellen einer Vorrichtung zur Kollimation. Vorrichtungen zur Kollimation eines Lichtstrahlfeldes finden zum Beispiel Anwendung bei Lichtemittern mit einem asymmetrischen Strahlfeld und werden unter anderem in Diodenlasern und Hochleistungs-Diodenlasern eingesetzt.

Ein Hochleistungs-Diodenlaser ist ein Halbleiterlaser mit einer Breitstreifenstruktur, um die Emission hoher Leistungen als Lichtstrahl im Wattbereich zu ermöglichen. Der Hochleistungs-Diodenlaser umfasst eine Mehrzahl von Einzelemittern.

Ein solcher Einzelemitter erzeugt ein Lichtstrahlfeld aus einer Ursprungsebene mit einer relativ zu dieser vorgegebenen Abstrahlrichtung. Das Lichtstrahlfeld divergiert bezüglich der Abstrahlrichtung in einer ersten Richtung (Fast-Axis) senkrecht zur Abstrahlrichtung schneller als in einer zweiten Richtung (Slow-Axis) senkrecht zur Abstrahlrichtung und zur ersten Richtung.

Aus dem Stand der Technik ist bekannt, ein möglichst symmetrisches Strahlungsfeld mit separater Kollimation in Fast-Axis- und in Slow-Axis-Richtung zu realisieren.

Relevanter Stand der Technik ist in den Dokumenten US4318594, DE60210010, US2012/027417 und EP3267233 zu finden.

Insbesondere für Systeme mit eher grossen Strahldurchmessern kann dabei zuerst eine Slow-Axis Kollimation mit einer zylindrischen Kollimationslinse SAC (Slow Axis Collimator), bzw. mit einer Mehrzahl von Kollimationslinsen, die in einem Slow- Axis-Array angeordnet sind, vorgenommen werden.

Danach erfolgt eine Fast-Axis Kollimation mit einer Kollimationslinse FAC (Fast Axis Collimator).

Um Öffnungsfehler, insbesondere für die Fast-Axis Kollimation, zu korrigieren, werden üblicherweise Zylinderlinsen verwendet, die ein nicht kreisförmiges Profil aufweisen.

Linsen mit Freiformflächen, also mit asphärischem und nicht kreisförmigem Oberflächenprofil, werden bevorzugt aus Kunststoff hergestellt, da sie kostengünstig, zum Beispiel in einem Spritzgussverfahren, herstellbar sind, wie es beispielsweise in der WO2018/125830 offenbart ist.

Je nach Anwendung der Vorrichtung unterliegt die Vorrichtung zur Kollimation Temperaturschwankungen, beispielsweise bei der Verwendung in einem LIDAR System, das bei Umgebungstemperaturen eingesetzt wird. Dabei wird eine Temperaturstabilität zwischen -40°C und +85°C bis +105° C gefordert. Mit einem LIDAR System kann der Abstand zu einer sichtbaren Oberfläche gemessen werden, indem Licht emittiert wird und die Eigenschaften des reflektierten Lichts analysiert werden, zum Beispiel die "flight time" eines Lichtpulses.

Die meisten Materialien haben Eigenschaften, die sich mit der Temperatur ändern. Die relative Ausdehnung und Kontraktion eines Materials aufgrund von Temperaturänderungen wird durch den Wärmeausdehnungskoeffizienten eines Materials, a, bestimmt, der üblicherweise in der Einheit $10^{-6}$ $K^{-1}$ angegeben wird.

Für die optische Leistung sind zwei relevante Eigenschaften zu berücksichtigen: die thermische Ausdehnung, also der Wärmeausdehnungskoeffizient $\alpha$, und die Art und Weise, wie sich der Brechungsindex mit der Temperatur ändert (dn/dT). Der Brechungsindex n ist eine materialspezifische Grösse und hängt von der Wellenlänge ab.

Der Brechungsindex beeinflusst die Brechkraft einer Linse. Je höher der Brechungsindex, desto stärker ist die Brechkraft der Linse.

Die Brechkraft hängt ausserdem von der Krümmung der Linse ab, die entsprechend dem der Wärmeausdehnungskoeffizient a, ebenfalls temperaturabhängig ist.

Aufgrund der Änderung des Brechungsindexes mit der Temperatur (dn/dT) und der Ausdehnung des Materials kann es daher zu einer thermischen Defokussierung kommen, also zu einer Veränderung der Fokuslage auf der Achse.

Für eine Vorrichtung, die in einem Gehäuse mit einem Wärmeausdehnungskoeffizienten $\alpha_t$, montiert ist, ist die Änderung der Fokuslage eine Kombination aus der Änderung der Brennweite der Linsensysteme und der Änderung der Bildebenenlage aufgrund der Gehäuseausdehnung. Ist die Änderung der Gehäuselänge gleich der Verschiebung der Bildebene durch die Linsensysteme, dann ist die Defokussierung Null und das System gilt als athermal.

Die Defokussierung kann mechanisch kompensiert werden, wobei die Linsen innerhalb des Gehäuses verschiebbar sind, was allerdings zusätzlich Bauteile erfordert und sehr aufwendig sein kann. Insbesondere bei Systemen mit langer Brennweite, wie sie zum Beispiel bei LIDAR Systemen eingesetzt werden, um einen ausreichenden Strahlquerschnitt zu erreichen, lässt sich wegen der relativ grossen Baulänge die Fokuslage nur schwer temperaturkompensieren.

Es ist ausserdem zum Beispiel aus EP 3 267 233 A2 bekannt, dass thermische Stabilität mit Linsen aus Glas erreicht werden kann.

Die Herstellung von Glaslinsen mit Freiformflächen ist allerdings, insbesondere für grössere Bauformen, sehr kostenaufwendig.

Es besteht daher die Aufgabe eine Vorrichtung zum Kollimieren, einen Diodenlaser, eine Verwendung eines Kollimationslinsensystems und ein Verfahren zur Kollimation eines Lichtstrahlfeldes zur Verfügung zu stellen, welche die Nachteile des Bekannten überwinden und mit welchen kostengünstig ein möglichst athermales Kollimieren ermöglicht wird.

Die Aufgabe wird gelöst durch eine Vorrichtung zur Kollimation eines Lichtstrahlfeldes, das bezüglich der Abstrahlrichtung in einer ersten Richtung senkrecht zur Abstrahlrichtung (Fast Axis) schneller divergiert als in einer zweiten Richtung (Slow Axis) senkrecht zur Abstrahlrichtung und zur ersten Richtung. Die Vorrichtung umfasst wenigstens ein erstes Kollimationslinsensystem (Fast Axis Collimator FAC) zur Kollimation des Lichtstrahlfeldes in der ersten Richtung und bevorzugt wenigstens ein zweites Kollimationslinsensystem (Slow Axis Collimator SAC) zur Kollimation des Lichtstrahlfeldes in der zweiten Richtung.

Das erste Kollimationslinsensystem umfasst eine Zylinderlinse, die aus Glas gefertigt ist.

Das erste Kollimationslinsensystem umfasst ausserdem ein asphärisches Linsenelement, welches aus Kunststoff, gefertigt ist. Bei dem Kunststoff handelt es sich insbesondere um Polycarbonat, Zeonex T62R oder Zeonox E48R.

Die Zylinderlinse aus Glas weist bevorzugt ein einfach zu fertigendes Profil auf, insbesondere ein zumindest teilweise kreisförmigem Profil. Das heisst, die Kontur einer Schnittfläche senkrecht zur Zylinderachse entspricht zumindest teilweise der Kontur eines Kreises oder Teilkreises. Die Zylinderlinse kann Entlang der optischen Achse auf einer Seite ein kreisförmiges Profil mit einem ersten Radius und einer ersten Krümmungsrichtung aufweisen und auf der gegenüber liegenden Seite ein kreisförmiges Profil mit einem zweiten Radius und einer zweiten Krümmungsrichtung.

Bevorzugt wird eine plankonvexe Linse mit einer planen Eintrittsseite und einer Austrittsseite mit konstanter konvexer Krümmung eingesetzt, um eine möglichst kostengünstige Herstellung zu erreichen.

Die Zylinderlinse aus Glas kann daher mit herkömmlichen Fertigungsverfahren, zum Beispiel mit einfachem Schleifen und Polieren unter vollflächigem Kontakt, hergestellt werden.

Als Glas kommt beispielsweise K-VC40 der Firma Sumita oder S-LAH64 der Firma Ohara in Frage. Die Gläser haben bei 20°C Abbildungseigenschaften, die denen einer Kunststofflinse entsprechen, weisen aber ein erheblich stabileres Temperaturverhalten auf.

Eine kreiszylindrische Glaslinse allein vermag es nicht, das Lichtstrahlfeld in der Fast-Axis Richtung mit ausreichender Qualität zu kollimieren, insbesondere bei grösseren Strahldurchmessern. Der Öffnungsfehler ist zu gross. Beispielsweis zeigt eine plankonvexe, kreiszylindrische Linse mit Brennweite f=32mm und numerischer Apertur NA=0.39 einen Öffnungsfehler von 65A, was für viele Anwendungen nicht akzeptabel ist.

Soll der Öffnungsfehler mit einer Glaslinse korrigiert werden, so müsste diese in einem aufwendigen und kostenintensiven Prozess hergestellt werden, beispielsweise mit Präzisionsblankpressen.

Die für die Fast Axis Kollimation notwendige Korrektur gegenüber einer Kollimation mit einer Zylinder-Linse mit zumindest teilweise kreisförmigem Profil wird erfindungsgemäss mit dem Linsenelement, das aus Kunststoff geformt ist, vorgenommen. Das Kunststofflinsenelement weist dazu eine Freiformfläche auf, die ein nicht kreisförmiges Profil besitzt.

Das erste Kollimationslinsensystem hat daher die optische Performance, die für eine Fast-Axis Kollimation auch bei grösseren Strahldurchmessern, zum Beispiel grösser als 20mm, ausreicht, besteht zu einem erheblichen Teil aus Glas, was thermische Stabilität begünstigt, und ist trotzdem günstig in der Herstellung, da das Glas nicht aufwendig bearbeitet werden muss.

In einer vorteilhaften Ausführung der Erfindung weist die Vorrichtung ein zweites Kollimationslinsensystem zur Kollimation des Lichtstrahlfeldes in der zweiten Richtung auf.

Das zweite Kollimationslinsensystem umfasst mindestens eine Zylinderlinse, bevorzugt mit zumindest teilweise kreisförmigem Profil. Das zweite Kollimationslinsensystem umfasst insbesondere ein Zylinderlinsenarray.

Das zweite Kollimationslinsensystem ist bevorzugt in Abstrahlrichtung vor dem ersten Kollimationslinsensystem angeordnet.

Das Zylinderlinsenarray für die Slow-Axis Kollimation kann Zylinderlinsen mit Kreisprofil umfassen. Die Zylinderlinsen für die Slow-Axis Kollimation haben wesentlich kleinere Durchmesser und kleinere Brennweiten, als die Linsen für die Fast-Axis Kollimation, daher ist das zweite Kollimationslinsensystem nicht so anfällig für thermische Instabilität. Zudem sind die Anforderungen an die Kollimationseigenschaften in Slow-Axis Richtung wesentlich geringer.

Das Zylinderlinsenarray kann aus Glas oder Kunststoff gefertigt sein, aus Kostengründen wird häufig Kunststoff bevorzugt.

Das Zylinderlinsenarray kann zum Beispiel 10 Zylinderlinsen umfassen, die parallel zueinander angeordnet sind, wobei die jeweiligen Zylinderachsen nebeneinander liegen. Diese dienen bevorzugt der Symmetrisierung eines Lichtfeldes, das von 10 Laserdiodenchips emittiert wird.

Das asphärische Linsenelement aus Kunststoff ist bevorzugt in Abstrahlrichtung nach der Zylinderlinse aus Glas angeordnet.

In einer vorteilhaften Weiterbildung umfasst die Vorrichtung ein weiteres optisches Element, das in Abstrahlrichtung nach der Zylinderlinse aus Glas angeordnet ist.

Das weitere optische Element kann zur Homogenisierung des Fernfeldes dienen, insbesondere in Richtung der Slow-Axis.

Das weitere optische Element kann auf der von der Zylinderlinse abgewandten Seite eine Oberfläche aufweisen, die zur Homogenisierung des Lichtstrahlfeldes dient.

Das weitere optische Element kann ein Linsenarray umfassen, bei welchem sich beispielsweise konkave und konvexe Bereiche abwechseln und ineinander übergehen, wobei die Profilkurven überall stetig differenzierbar sind.

Das weitere optische Element kann auch auf der von der Zylinderlinse aus Glas abgewandten Seite eine ebene Fläche aufweisen und die der Zylinderlinse zugewandte Seite weist abwechselnd konkave und konvexe Bereiche auf.

Das weitere optische Element ist bevorzugt aus Kunststoff gefertigt.

In einer bevorzugten Ausführung der Erfindung ist die optisch wirksame Oberfläche des asphärischen Linsenelements der Zylinderlinse zugewandt. Optisch wirksam ist hier im Hinblick auf die Kollimation des Lichtstrahlenfeldes in Fast-Axis Richtung gemeint.

Das asphärische Linsenelement kann als integraler Bestandteil des weiteren optischen Elements ausgebildet sein. Dabei dient die der Zylinderlinse zugewandte Seite der Kollimation, die als Freiformfläche ausgebildet ist, und die der Zylinderlinse abgewandte Seite dient der Homogenisierung und kann abwechselnd konvexe und konkave Bereiche aufweisen.

Grundsätzlich ist es auch möglich, die Homogenisierung mit der zur Zylinderlinse zugewandten Seite und die Kollimation mit der von der Zylinderlinse abgewandten Seite durchzuführen.

Die Anzahl der Bauteile kann so begrenzt werden, was sich positiv auf die Montage und das Gewicht auswirkt.

Das weitere optische Element ist bevorzugt in einem Spritzgussverfahren und in einer Spritzgussform hergestellt.

Die Freiformfläche des asphärischen, zylindrischen Linsenelements, insbesondere die zu der Zylinderlinse aus Glas weisenden Oberfläche des weiteren optischen Elements, besitzt eine Kontur, welche durch die folgende Formel beschreibbar ist:

$$z(x) = \frac{\frac{x^2}{R}}{1 + \sqrt{1 - (1+k)\frac{x^2}{R^2}}} + \sum_{n=1}^{N} A_n \cdot x^n$$

.

Hierbei bezeichnet x die Koordinatenachse, die senkrecht zur Ausbreitungsrichtung des Lichts, also zur optischen Achse, und zur Zylinderachse verläuft. Die Koordinate x gibt also den Abstand von einem Punkt auf der asphärischen Kurve in Richtung der x-Koordinate an. z bezeichnet die Tiefe der asphärischen Oberfläche (d.h. ein senkrechter Abstand zwischen dem Punkt auf der asphärischen Oberfläche, der um den Abstand x von der Symmetrieebene der Zylinderlinse, welche durch die Zylinderachse und der Ausbreitungsrichtung gebildet wird, beabstandet ist, und einer Tangentialebene, die tangential zu einem Scheitelpunkt der asphärischen Oberfläche auf der optischen Achse verläuft), R der Krümmungsradius der Oberfläche des optischen Elements nahe der optischen Achse, k die konische Konstante und $A_i$ asphärische Koeffizienten.

Beispielsweise kann k=-1, $A_1$=0, $A_3$=0, $A_i$=0 für i>4 gewählt werden.

Besonders bevorzugt sind zumindest der Parameter R und $A_4$ nicht null. Die Oberfläche des asphärischen Linsenelements aus Kunststoff hat im Gegensatz zu der Zylinderlinse aus Glas also kein kreisförmiges Profil und kann Öffnungsfehler korrigieren.

In einer bevorzugten Ausführung der Erfindung umfasst die Vorrichtung eine Fassung, in welcher das erste Kollimationslinsensystem eingefasst ist. Insbesondere ist das zweite Kollimationslinsensystem in derselben Fassung eingefasst.

Bevorzugt umfasst die Fassung Teile aus Zink-Druckguss oder Kunststoff, insbesondere einem Komposit-Kunststoff mit eingelagerten Fasern, beispielsweise PPS Durafide 6150T6 oder Ryton R-7-190BL.

In einer bevorzugten Ausführung der Erfindung ist der Wärmeausdehnungskoeffizienten $\alpha_t$ der Fassung gleich dem Wärmeausdehnungskoeffizienten $\alpha_f$ des ersten Kollimationslinsensystems. In diesem Fall kann das Kollimationssystem als athermal betrachtet werden.

Das zweite Kollimationssystem kann in derselben Fassung angebracht sein. Es braucht jedoch bei der Berechnung nicht mitberücksichtigt werden, da es vergleichsweise unempfindlich bezüglich einer Verschiebung der Fokuslage ist.

Erfindungsgemäss besteht das erste Kollimationslinsensystem aus mindestens der Zylinderlinse aus Glas und dem asphärischen Linsenelement aus Kunststoff.

Der Temperaturausdehnungskoeffizient des Kollimationslinsensystems ist somit zumindest von den beiden Komponenten abhängig.

Grundsätzlich kann die Brennweite eines Systems aus mehreren dünnen Einzellinsen, deren Abstand kleiner ist als die Brennweite, mit der folgenden Summenformel berechnet werden.

$$\frac{1}{f} = \sum_i \frac{1}{f_i}$$

Dabei ist f die effektive Brennweite des Gesamtsystems und $f_i$ sind die Brennweiten der Einzellinsen. Alternativ wird auch mit den Brechkäften, also den Inversen der Brennweiten gerechnet.

$$p = \frac{1}{f},$$

$$p_i = \frac{1}{f_i},$$

$$p = \sum_i p_i.$$

Der Temperaturkoeffizient der Linsen kann über die Temperaturabhängigkeit der Brechkäfte oder über die Temperaturabhängigkeit der Brennweiten defininert werden. Diese haben den folgenden Zusammenhang für die Einzellinse:

$$\alpha_{pi} = \frac{1}{p_i}\frac{\partial p_i}{\partial T} = f\frac{\partial p_i}{\partial T} = -\frac{1}{f_i}\frac{\partial f_i}{\partial T} = -\alpha_{fi}.$$

Für das Gesamsystem gilt ananlog

$$\alpha_p = \frac{1}{p}\frac{\partial p}{\partial T} = f\frac{\partial p}{\partial T} = -\frac{1}{f}\frac{\partial f}{\partial T} = -\alpha_f$$

oder auch

$$\alpha_p = \frac{1}{p}\frac{\partial p}{\partial T} = \frac{1}{p}\frac{\partial(\sum_i p_i)}{\partial T} = \frac{\sum_i \frac{\partial p_i}{\partial T}}{p} = \frac{\sum_i \alpha_{pi} \cdot p_i}{\sum_i pi} = \frac{-\sum_i \alpha_{fi} \cdot p_i}{\sum_i pi}.$$

Der Temperaturausdehnungskoeffizient ist also das gewichtete Mittel der entsprechenden Temperaturausdehnungskoeffizienten der Einzellinsen.

Ein dünnes mehrlinsiges System wird athermal, wenn der Temperaturausdehnungskoeffizient $\alpha_f$ gleich dem Temperaturausdehnungskoeffizient $\alpha_t$ des Gehäuses ist:

$$\alpha_f = -\alpha_p = \alpha_t.$$

Für ein System mit zwei Linsen und einem Gehäuse aus vorgegebenen Materialien mit bekannten Temperaturausdehnungskoeffizienten können die jeweiligen Brennweiten oder Brechkräfte mit dem folgenden Gleichungssystem ermittelt werden:

$$\frac{p_1}{p} = \frac{\alpha_{f2} - \alpha_t}{\alpha_{f2} - \alpha_{f1}}$$

$$\frac{p_2}{p} = \frac{\alpha_t - \alpha_{f1}}{\alpha_{f2} - \alpha_{f1}}.$$

Diese Berechnungen stellen eine erste Näherung dar, in der noch keine Wellenlängenabhängigkeit berücksichtigt wird.

Beispielweise soll ein Kollimationslinsensystem mit zwei Linsen erstellt werden, das insgesamt die Brennweite 30mm aufweisen soll. Die erste Linse soll aus Glas bestehen, beispielsweise aus CDGM H-ZF2, das einen Temperaturausdehnungskoeffizienten $\alpha_{f1}$=8.1 $10^{-6}$K$^{-1}$ besitzt. Die zweite Linse soll aus Kunststoff bestehen, beispielsweise aus Polycarbonat, das einen Temperaturausdehnungskoeffizienten $\alpha_{f2}$=250.5 $10^{-6}$K$^{-1}$ besitzt. Als Fassungmaterial soll zum Beispiel Zink mit einem Temperaturausdehnungskoeffizienten $\alpha_t$=27 $10^{-6}$K$^{-1}$ verwendet werden.

Es ergben sich dann für die ersten Linse eine Brechkraft von 0.031mm$^{-1}$ oder eine Brennweite von 32.5mm, für die zweite Linse eine Brechkraft von 0.002599mm$^{-1}$ oder eine Brennweite von 384.8mm.

Umgekehrt kann für einen vorgegebene Brennweite das passende Material mit dem entsprechende Wärmeausdehnungskoeffizienten gefunden werden.

Aus den Brennweiten ergeben sich die Krümmungsradien an den Scheitelpunkten. In einem weiteren Schritt werden die Korrekturen für die asphärische Linse aus Kunststoff zur Minimierung des Öffnungsfehler bestimmt.

Entsprechende Berechnungen können auch für mehr Linsen und für Linsen durchgeführt werden, die nicht als dünn gelten, und deren Dicken und Abstände nicht mehr als klein verglichen mit den Brennweiten betrachtet werden können.

Korrekturen müssen auch für grössere Linsendurchmesser vorgenommen werden, insbesondere, wenn die Brechkraft mit dem Abstand von der optischen Achse variiert.

Für die Korrekturen bezieht man beispielweise den Verlauf von Randstrahlen, die eine Abstand zur optischen Achse aufweisen, mit ein.

Vorzugsweise weist die Zylinderlinse aus Glas eine Brennweite von grösser 30mm auf. Das asphärische Linsenelement weist bevorzugt eine Brennweite von grösser 200mm auf.

Die Aufgabe wird ausserdem gelöst durch einen Diodenlaser, insbesondere für ein LIDAR-System, der eine Laserdiode und eine Vorrichtung wie oben beschrieben umfasst.

Bevorzugt umfasst der Diodenlaser mehrere Laserdioden.

Die Aufgabe wird ausserdem gelöst durch eine Verwendung eines Kollimationslinsensystems, das eine Zylinderlinse, die aus Glas gefertigt ist, und ein asphärisches Linsenelement, welches aus Kunststoff gefertigt ist, umfasst, zum Fast-Axis Kollimieren eines Lichtstrahlfeldes mindestens einer Laserdiode.

Die Zylinderlinse weist bevorzugt ein zumindest teilweise kreisförmiges Profil auf und ist daher mit herkömmlichen Methoden kostengünstig herstellbar. Das asphärische Linsenelement aus Kunststoff ist bevorzugt als Zylinderlinse mit nicht kreisförmigem Profil ausgebildet.

Die Aufgabe wird zudem gelöst durch ein Verfahren zur Kollimation eines Lichtstrahlfeldes. Das Lichtstrahlfeld divergiert bezüglich der Abstrahlrichtung in einer ersten Richtung (Fast Axis) senkrecht zur Abstrahlrichtung schneller als in einer zweiten Richtung (Slow Axis) senkrecht zur Abstrahlrichtung und zur ersten Richtung. Das Lichtstrahlfeld wird durch wenigstens ein erstes Kollimationslinsensystem in der ersten Richtung kollimiert und bevorzugt durch wenigstens ein zweites Kollimationslinsensystem in der zweiten Richtung kollimiert.

Das erste Kollimationslinsensystem umfasst eine Zylinderlinse, insbesondere mit zumindest teilweise kreisförmigem Profil, die aus Glas gefertigt ist. Das erste Kollimationslinsensystem umfasst ausserdem ein asphärisches Linsenelement, welches aus Kunststoff gefertigt ist. Das asphärische Linsenelement aus Kunststoff ist bevorzugt als Zylinderlinse mit nicht kreisförmigem Profil ausgebildet.

Die Aufgabe wird zudem gelöst durch ein Verfahren zum Herstellen einer Vorrichtung zur Kollimation eines Lichtstrahlfeldes, insbesondere eine Vorrichtung wie sie oben beschrieben ist. Das Lichtstrahlfeld divergiert bezüglich der Abstrahlrichtung in einer ersten Richtung senkrecht zur Abstrahlrichtung schneller als in einer zweiten Richtung senkrecht zur Abstrahlrichtung und zur ersten Richtung. Das Verfahren umfasst die folgenden Schritte. Zunächst erfolgt die Erstellung wenigstens eines ersten Kollimationslinsensystem zur Kollimation des Lichtstrahlfeldes in der ersten Richtung, wobei das erste Kollimationslinsensystem eine Zylinderlinse, insbesondere mit zumindest teilweise kreisförmigem Profil, die aus Glas gefertigt ist, und ein asphärisches Linsenelement, welches aus Kunststoff gefertigt ist, umfasst. Anschliessend wird das Kollimationslinsensystem in einer Fassung montiert.

Die Materialien der Zylinderlinse und dem asphärischen Linsenelement werden so gewählt, dass sich bei einem gegebenen Fassungsmaterial eine gewünschte gesamte Brennweite ergibt. Dabei soll das System aus Fassung und Kollimationslinsensystem athermal sein.

Dabei soll ein Grossteil der Brechung durch die Zylinderlinse aus Glas erfolgen.

Das Profil des asphärischen Linsenelements wird so festgelegt, dass der Öffnungsfehler genügend klein ist.

Im Folgenden wird die Erfindung in Ausführungsbeispielen anhand von Zeichnungen näher erläutert. Hierbei zeigen

| | |
|---|---|
| Figur 1 | eine schematische Darstellung eines erfindungsgemässen Diodenlasers in einer ersten Seitenansicht; |
| Figur 2 | eine schematische Darstellung des erfindungsgemässen Diodenlasers in einer zweiten Seitenansicht; |
| Figur 3 | eine schematische Darstellung einer erfindungsgemässen Vorrichtung in einer ersten perspektivischen Ansicht; |
| Figur 4 | eine zweite perspektivische Ansicht der erfindungsgemässen Vorrichtung; |
| Figur 5 | eine dritte perspektivische Ansicht der erfindungsgemässen Vorrichtung; |
| Figur 6 | eine schematische Darstellung weiteren optischen Elements in seitlicher Ansicht; |
| Figur 7 | eine Detailansicht X aus Figur 6. |

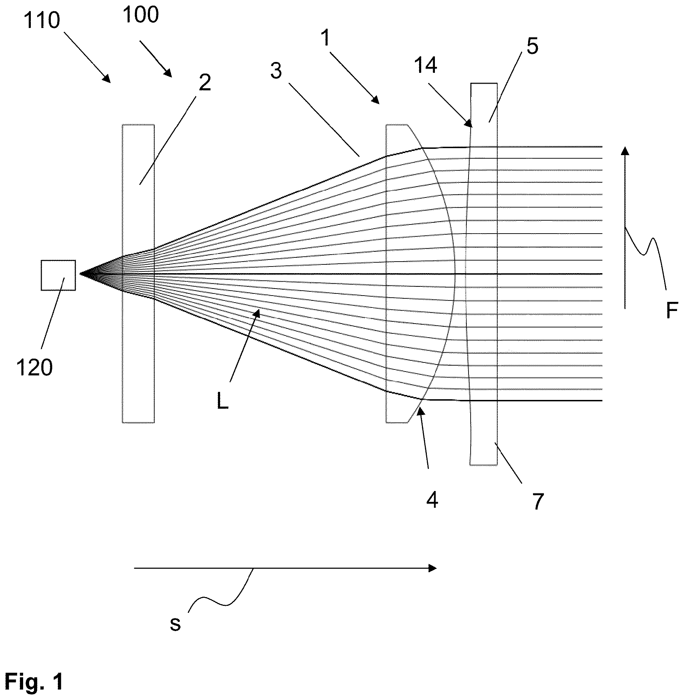

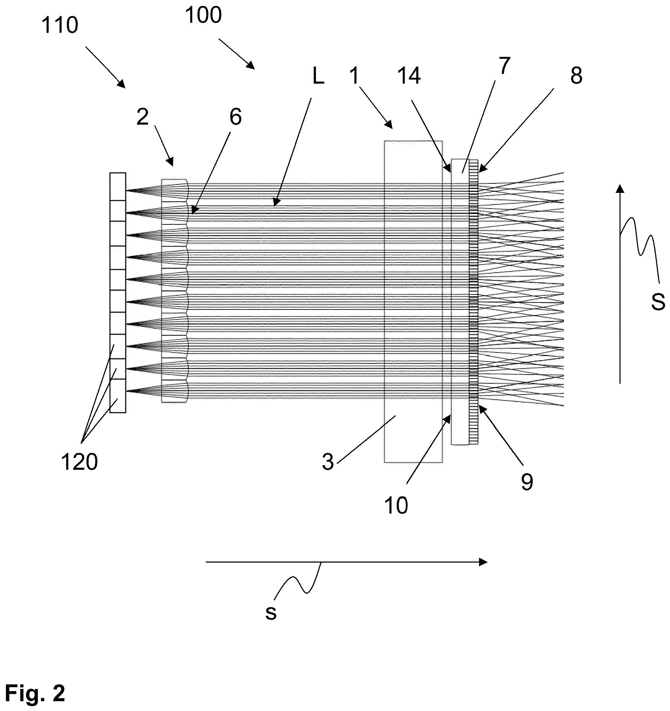

Figur 1 zeigt eine schematische Darstellung eines erfindungsgemässen Diodenlasers 110 mit einer erfindungsgemässen Vorrichtung 100 in einer ersten Seitenansicht, Figur 2 eine schematische Darstellung des erfindungsgemässen Diodenlasers 110 in einer zweiten dazu senkrechten Seitenansicht.

Der Diodenlaser 110 umfasst mehrere Laserdioden 120.

Die Vorrichtung 100 dient zur Kollimation eines Lichtstrahlfeldes L, das bezüglich der Abstrahlrichtung s in einer ersten Richtung F (siehe Figur 1) senkrecht zur Abstrahlrichtung s schneller divergiert als in einer zweiten Richtung S (siehe Figur 2) senkrecht zur Abstrahlrichtung s und zur ersten Richtung F.

Die Vorrichtung 100 umfasst ein erstes Kollimationslinsensystem 1 zur Kollimation des Lichtstrahlfeldes L in der ersten Richtung F und ein zweites Kollimationslinsensystem 2 zur Kollimation des Lichtstrahlfeldes L in der zweiten Richtung S.

Das erste Kollimationslinsensystem 1 umfasst eine Zylinderlinse 3 mit zumindest teilweise kreisförmigem Profil 4, die aus Glas gefertigt ist.

Das erste Kollimationslinsensystem 1 umfasst ausserdem ein asphärisches Linsenelement 5, welches aus Kunststoff gefertigt ist. Das asphärische Linsenelement 5 ist in Abstrahlrichtung s nach der Zylinderlinse 3 aus Glas angeordnet.

Wie aus Figur 2 ersichtlich ist, weist die Vorrichtung 100 ein zweites Kollimationslinsensystem 2 zur Kollimation des Lichtstrahlfeldes in der zweiten Richtung S auf, das ein Zylinderlinsenarray 6 umfasst und das bevorzugt in Abstrahlrichtung s vor dem ersten Kollimationslinsensystem 1 angeordnet ist.

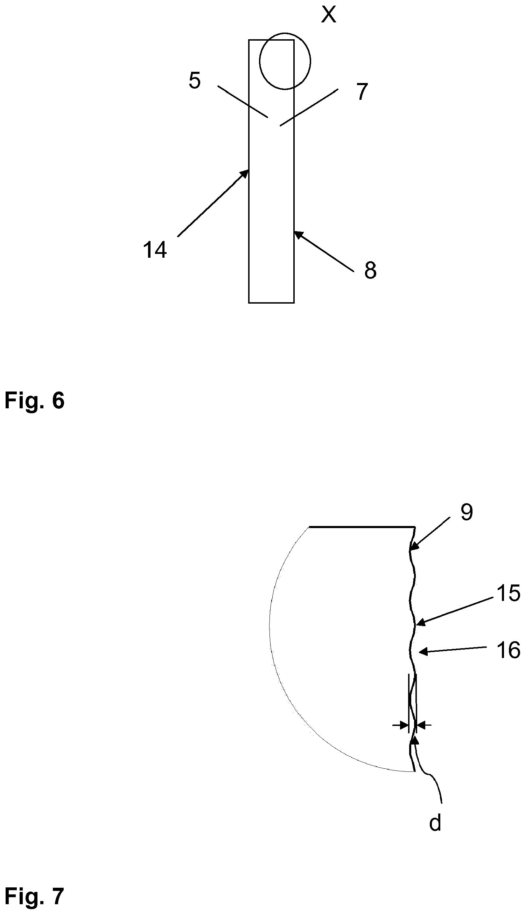

Die Vorrichtung 100 umfasst ein weiteres optisches Element 7, das in Abstrahlrichtung s nach der Zylinderlinse 3 angeordnet ist. Das optische Element 7 besitzt eine Oberfläche 8 auf der von der Zylinderlinse 3 abgewandten Seite, welche ein Profil 9 aufweist, das zur Homogenisierung des Lichtstrahlfeldes in Slow-Axis Richtung dient, siehe auch Figuren 6 und 7.

Das asphärische Linsenelement 5 ist integraler Bestandteil des optischen Elements 7. Die optisch aktive Fläche 14 des asphärischen Linsenelements 5 ist auf der Seite 10 des optischen Elements 7 ausgebildet, die der Zylinderlinse 3 zugewandt ist.

Die optisch aktive Fläche 14 ist als Freiformfläche ausgebildet und lässt sich mit der Formel

$$z(x) = x^2/2R + A_2x^2 + A_4x^4 + A_6x^6$$

beschreiben.

Für ein erstes Kollimationslinsensystem 1 mit einer Zylinderlinse 3 aus CDGM H-ZF2-Glas und einem asphärischen Linsenelement 5 aus dem Kunststoff Zeonex E48R werden beispielwese die folgenden Parameter gewählt: R= 125.6mm, $A_2$=0, $A_4$=-5.8E-6, $A_6$= -8.0E-9.

Die Brennweite des asphärischen Linsenelements 5 beträgt 240mm.

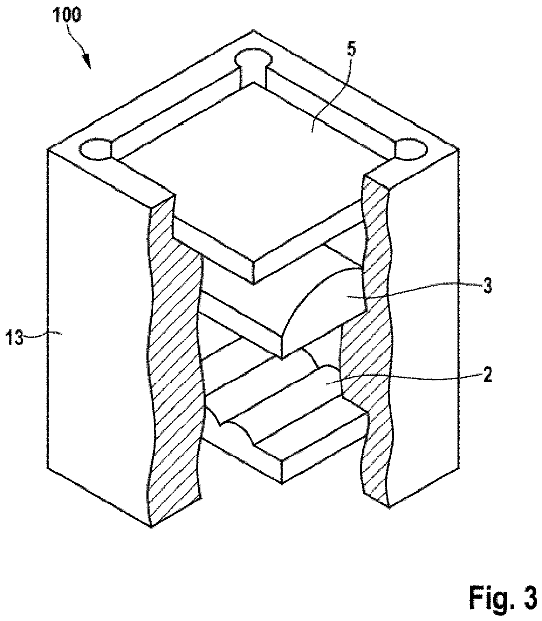

Figur 3 zeigt eine schematische Darstellung der erfindungsgemässen Vorrichtung 100 in einer ersten perspektivischen Ansicht.

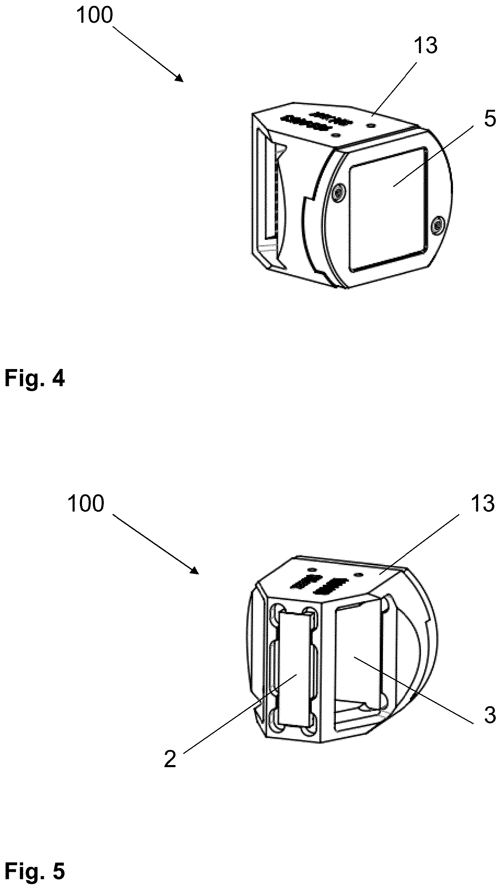

Figuren 4 und 5 zeigen eine zweite und dritte perspektivische Ansicht der erfindungsgemässen Vorrichtung 100.

Die Vorrichtung 100 kann an einen Emitter angekoppelt werden. Dieser besteht zum Beispiel aus einem Stapel von mehreren Laserdiodenchips mit einer Wellenlänge von etwa 900 nm.

Für eine LIDAR System soll der Messbereich zum Beispiel einen Abstand zwischen 1.5m bis 180m abdecken.

In diesem Bereich soll das Lichtstrahlfeld in der Fast Axis nur begrenzt divergieren.

In der Slow-Axis soll eine homogenes divergierendes Lichtstrahlfeld generiert werden, so dass eine linienförmiges Messfeld entsteht. Unmittelbar nach dem Austritt aus der Fassung soll der Lichtstrahl etwa in einer Abmessung von 25mm x 25 mm vorliegen.

Die Brennweite des ersten Kollimationslinsensystems 1 wird bevorzugt so gewählt, dass die Strahlbreite ohne ein weiteres optisches Element, zum Beispiel ein Teleskop, erreicht wird.

In horizontaler Richtung ist eine Divergenz von etwa 0.1°-0.2° zulässig, in vertikaler Richtung eine Divergenz von 23,5°-24.5°.

Das Lichtstrahlfeld soll diese Toleranzen in einem Temperaturbereich zischen -40°C bis 105°C erfüllen. Dazu muss die Optik in diesem Bereich athermal sein.

Mit einer Zylinderlinse 3 aus Glas und einem asphärischen Linsenelement 5 aus Kunststoff kann dies gewährleistet werden.

Die Vorrichtung 100 umfasst eine Fassung 13, in welcher das zweite Kollimationslinsensystem 2, die Zylinderlinse 3 und das asphärische Linsenelement 5 eingefasst sind.

Figur 6 zeigt eine schematische Darstellung eines weiteren optischen Elements 7 in seitlicher Ansicht und Figur 7 eine Detailansicht X aus Figur 6.

Das asphärische Element 5 und das weitere optische Element 7 können als ein Element ausgebildet sein. Die der nicht dargestellten Zylinderlinse 3 zugewandte Oberfläche 14 ist als Freiformfläche ausgeführt und dient der Kollimierung.

Die von der nicht dargestellten Zylinderlinse 3 abgewandte Oberfläche 8 dient der Homogenisierung.

Die Oberfläche weist dazu eine Profil 9 auf, bei dem sich konvexe Bereiche 15 und konkave Bereiche 16 abwechseln.

Das Profil hat dabei eine Höhendifferenz d zwischen 0.5mm und 1mm.

## Patentansprüche

1. Vorrichtung (100) zur Kollimation eines Lichtstrahlfeldes (L), das bezüglich der Abstrahlrichtung (s) in einer ersten Richtung (F) senkrecht zur Abstrahlrichtung (s) schneller divergiert als in einer zweiten Richtung (S) senkrecht zur Abstrahlrichtung (s) und zur ersten Richtung (F), umfassend wenigstens ein erstes Kollimationslinsensystem (1) zur Kollimation des Lichtstrahlfeldes (L) in der ersten Richtung (F) und bevorzugt wenigstens ein zweites Kollimationslinsensystem (2) zur Kollimation des Lichtstrahlfeldes in der zweiten Richtung (S), wobei das erste Kollimationslinsensystem (1) eine Zylinderlinse (3), insbesondere mit zumindest teilweise kreisförmigem Profil (4), umfasst, die aus Glas gefertigt ist,

   **dadurch gekennzeichnet, dass**
   das erste Kollimationslinsensystem (1) ein asphärisches Linsenelement (5) umfasst, welches aus Kunststoff, insbesondere Polycarbonat, Zeonex E48R oder Zeonex T62R, gefertigt ist.

2. Vorrichtung gemäss Anspruch 1, wobei die Vorrichtung ein zweites Kollimationslinsensystem (2) zur Kollimation des Lichtstrahlfeldes in der zweiten Richtung (S) aufweist, das ein Zylinderlinsenarray (6) umfasst und das bevorzugt in Abstrahlrichtung (s) vor dem ersten Kollimationslinsensystem (1) angeordnet ist.

3. Vorrichtung gemäss Anspruch 1 oder 2, wobei das asphärische Linsenelement (5) in Abstrahlrichtung (s) nach der Zylinderlinse (3) aus Glas angeordnet ist.

4. Vorrichtung gemäss einem der vorhergehenden Ansprüche, wobei die Vorrichtung ein optisches Element (7) umfasst, das in Abstrahlrichtung (s) nach der Zylinderlinse (3) aus Glas angeordnet ist, bevorzugt mit einer Oberfläche (8) auf der von der Zylinderlinse (3) abgewandten Seite, die zur Homogenisierung des Lichtstrahlfelds dient.

5. Vorrichtung gemäss einem der vorhergehenden Ansprüche, wobei eine optisch wirksame Oberfläche (14) des asphärischen Linsenelements (5) der Zylinderlinse (3) zugewandt ist.

6. Vorrichtung gemäss Anspruch 4 oder 5, wobei das asphärische Linsenelement (5) als integraler Bestandteil des optischen Elements (7) ausgebildet ist.

7. Vorrichtung gemäss einem der Ansprüche 4 bis 6, wobei das optische Element (7) ein Linsenarray umfasst.

8. Vorrichtung gemäss einem der Ansprüche 4 bis 7, wobei das optische Element (7) in einer Spritzgussform hergestellt ist.

9. Vorrichtung gemäss einem der Ansprüche 4 bis 8, wobei das optische Element (7) eine zu der Zylinderlinse (3) weisende Oberfläche (14) aufweist, deren Kontur durch die Formel

$$z(x) = \frac{\frac{x^2}{R}}{1 + \sqrt{1 - (1 + k)\frac{x^2}{R^2}}} + \sum_{n=1}^{N} A_n \cdot x^n$$

beschreibbar ist.

10. Vorrichtung gemäss einem der vorhergehenden Ansprüche, wobei die Vorrichtung eine Fassung (13) umfasst, in welcher das erste Kollimationslinsensystem (1) eingefasst ist, wobei die Fassung (13) bevorzugt Teile aus Zink-Druckguss oder Kunststoff umfasst.

11. Vorrichtung gemäss Anspruch 10, wobei der Wärmeausdehnungskoeffizienten $\alpha_h$ der Fassung (13) gleich dem Wärmeausdehnungskoeffizienten $\alpha_f$ des ersten Kollimationslinsensystems (1) ist.

12. Vorrichtung gemäss einem der vorhergehenden Ansprüche, wobei die Zylinderlinse (3) aus Glas eine Brennweite grösser als 30mm, bevorzugt zwischen 30 und 35 mm, aufweist.

13. Vorrichtung gemäss einem der vorhergehenden Ansprüche, wobei das asphärische Linsenelement (5) eine Brennweite von grösser 200 mm aufweist.

14. Diodenlaser (110), insbesondere für eine LIDAR-System, umfassend eine Laserdiode (120), bevorzugt mehrere Laserdioden (120) und eine Vorrichtung (100) gemäss einem der vorhergehenden Ansprüche.

15. Verwendung eines Kollimationslinsensystems (1) umfassend eine Zylinderlinse (3), insbesondere mit zumindest teilweise kreisförmigem Profil (4), die aus Glas gefertigt ist, und ein asphärisches Linsenelement (5), welches aus Kunststoff gefertigt ist, zum Fast Axis Kollimieren eines Lichtstrahlfeldes (L) mindestens einer Laserdiode (120).

16. Verfahren zur Kollimation eines Lichtstrahlfeldes (L), das bezüglich der Abstrahlrichtung (s) in einer ersten Richtung (F) senkrecht zur Abstrahlrichtung (s) schneller divergiert als in einer zweiten Richtung (S) senkrecht zur Abstrahlrichtung (s) und zur ersten Richtung (F), wobei das Lichtstrahlfeld (L) durch wenigstens ein erstes Kollimationslinsensystem (1) in der ersten Richtung (F) kollimiert wird und bevorzugt durch wenigstens ein zweites Kollimationslinsensystem (2) in der zweiten Richtung (S) kollimiert wird, wobei das erste Kollimationslinsensystem (1) eine Zylinderlinse (3), insbesondere mit zumindest teilweise kreisförmigem Profil (4), umfasst, die aus Glas gefertigt ist, **dadurch gekennzeichnet, dass** das erste Kollimationslinsensystem (1) ein asphärisches Linsenelement (5) umfasst, welches aus Kunststoff gefertigt ist.

17. Verfahren zum Herstellen einer Vorrichtung (100) zur Kollimation eines Lichtstrahlfeldes (L), insbesondere gemäss einem der Ansprüche 1-13, das bezüglich der Abstrahlrichtung (s) in einer ersten Richtung (F) senkrecht zur Abstrahlrichtung (s) schneller divergiert als in einer zweiten Richtung (S) senkrecht zur Abstrahlrichtung (s) und zur ersten Richtung (F), umfassend die folgenden Schritte

- Erstellen wenigstens eines ersten Kollimationslinsensystem (1) zur Kollimation des Lichtstrahlfeldes (L) in der ersten Richtung (F), wobei das erste Kollimationslinsensystem (1) eine Zylinderlinse (3), insbesondere mit zumindest teilweise kreisförmigem Profil (4), die aus Glas gefertigt ist, und ein asphärisches Linsenelement (5), welches aus Kunststoff gefertigt ist, umfasst,
- Montieren des Kollimationslinsensystem (1) in einer Fassung.

**Claims**

1. Device (100) for collimating a light beam field (L) which diverges more quickly with respect to the direction of emission (s) in a first direction (F) perpendicular to the direction of emission (s) than in a second direction (S) perpendicular to the direction of emission (s) and to the first direction (F), comprising at least one first collimation lens system (1) for collimating the light beam field (L) in the first direction (F) and preferably at least one second collimation lens system (2) for collimating the light beam field in the second direction (S), wherein the first collimation lens system (1) comprises a cylindrical lens (3), in particular with an at least partially circular profile (4), which is made from glass, **characterised in that**
said first collimation lens system (1) comprises an aspherical lens element (5) made from plastic, in particular polycarbonate, Zeonex E48R or Zeonex T62R.

2. Device according to claim 1, wherein the device comprises a second collimation lens system (2) for collimating the light beam field in the second direction (S), which comprises a cylindrical lens array (6) and which is preferably arranged in front of the first collimation lens system (1) in the direction of emission (s).

3. Device according to claim 1 or 2, wherein the aspherical lens element (5) is arranged after the cylindrical lens (3) made from glass in the direction of emission (s).

4. Device according to one of the preceding claims, the device comprising an optical element (7) which is arranged after the cylindrical lens (3) of glass in the direction of emission (s), preferably with a surface (8) on the side facing away from the cylindrical lens (3) which serves to homogenize the light beam field.

5. Device according to any of the preceding claims, wherein an optically effective surface (14) of the aspherical lens element (5) faces the cylindrical lens (3).

6. Device according to claim 4 or 5, wherein the aspherical lens element (5) is formed as an integral part of the optical element (7).

7. Device according to one of claims 4 to 6, wherein the further optical element (7) comprises a lens array.

8. Device according to one of claims 4 to 7, wherein the optical element (7) is produced in an injection mould.

9. Device according to one of claims 4 to 8, wherein the optical element (7) has a surface (14) facing the cylindrical lens (3), the contour of which can be described by the formula

$$z(x) = \frac{\frac{x^2}{R}}{1 + \sqrt{1 - (1+k)\frac{x^2}{R^2}}} + \sum_{n=1}^{N} A_n \cdot x^n$$

10. Device according to any of the preceding claims, said device comprising a mount (13) in which the first collimation lens system (1) is mounted, said mount (13) preferably comprising parts made of zinc die-cast or plastic.

11. Device according to claim 10, wherein the coefficient of thermal expansion $\alpha_h$ of the mount (13) is equal to the coefficient of thermal expansion $\alpha_f$ of the first collimation lens system (1).

12. Device according to any of the preceding claims, wherein the cylindrical lens (3) made from glass has a focal length greater than 30mm, preferably between 30 and 35mm.

13. Device according to one of the preceding claims, the aspherical lens element (5) having a focal length of more than 200 mm.

14. Diode laser (110), in particular for a LIDAR system, comprising a laser diode (120), preferably several laser diodes (120) and a device (100) according to one of the preceding claims.

15. Use of a collimating lens system (1) comprising a cylindrical lens (3), in particular with an at least partially circular profile (4), which is made from glass, and an aspherical lens element (5), which is made from plastic, for fast axis collimation of a light beam field (L) of at least one laser diode (120).

16. Method for collimating a light beam field (L) which diverges more quickly with respect to the direction of emission (s) in a first direction (F) perpendicular to the direction of emission (s) than in a second direction (S) perpendicular to the direction of emission (s) and to the first direction (F), the light beam field (L) being collimated in the first direction (F) by at least one first collimation lens system (1) and preferably being collimated in the second direction (S) by at least one second collimation lens system (2), wherein the first collimation lens system (1) comprises a cylindrical lens (3), in particular with an at least partially circular profile (4), which is made of glass, **characterized in that** the first collimation lens system (1) comprises an aspherical lens element (5) which is made of plastic.

17. Method of manufacturing a device (100) for collimating a light beam field (L), in particular according to one of claims 1-13, which diverges more quickly with respect to the direction of emission (s) in a first direction (F) perpendicular to the direction of emission (s) than in a second direction (S) perpendicular to the direction of emission (s) and to the first direction (F), comprising the following steps

    - Providing at least one first collimation lens system (1) for collimating the light beam field (L) in the first direction (F), wherein the first collimation lens system (1) comprises a cylindrical lens (3), in particular with an at least partially circular profile (4), which is made of glass, and an aspherical lens element (5), which is made of plastic,
    - Mount the collimation lens system (1) in a mount.

## Revendications

1. Dispositif (100) pour collimater un champ de rayons lumineux (L) qui diverge plus rapidement par rapport à la direction de rayonnement (s) dans une première direction (F) perpendiculaire à la direction de rayonnement (s) que dans une deuxième direction (S) perpendiculaire à la direction de rayonnement (s) et à la première direction (F), comprenant au moins un premier système de lentilles de collimation (1) pour collimater le champ de faisceau lumineux (L) dans la première direction (F) et de préférence au moins un deuxième système de lentilles de collimation (2) pour collimater le champ de faisceau lumineux dans la deuxième direction (S), le premier système de lentilles de collimation (1) comprenant une lentille cylindrique (3), en particulier avec un profil au moins partiellement circulaire (4), qui est fabriquée en verre,
**caractérisé en ce que**
le premier système de lentille de collimation (1) comprend un élément de lentille asphérique (5) qui est fabriqué en matière plastique, en particulier en polycarbonate, en Zeonex E48R ou en Zeonex T62R.

2. Dispositif selon la revendication 1, dans lequel le dispositif présente un deuxième système de lentilles de collimation (2) pour la collimation du champ de rayonnement lumineux dans la deuxième direction (S), qui comprend un réseau de lentilles cylindriques (6) et qui est disposé de préférence dans la direction de rayonnement (s) avant le premier système de lentilles de collimation (1).

3. Dispositif selon la revendication 1 ou 2, dans lequel l'élément de lentille asphérique (5) est disposé en aval de la lentille cylindrique (3) en verre dans la direction de rayonnement (s).

4. Dispositif selon l'une des revendications précédentes, dans lequel le dispositif comprend un élément optique (7) qui est disposé dans la direction de rayonnement (s) après la lentille cylindrique (3) en verre, de préférence avec une surface (8) sur le côté opposé à la lentille cylindrique (3), qui sert à homogénéiser le champ du faisceau lumineux.

5. Dispositif selon l'une des revendications précédentes, dans lequel une surface optiquement active (14) de l'élément de lentille asphérique (5) est tournée vers la lentille cylindrique (3).

6. Dispositif selon la revendication 4 ou 5, dans lequel l'élément de lentille asphérique (5) est conçu comme partie intégrante de l'élément optique (7).

7. Dispositif selon l'une des revendications 4 à 6, dans lequel l'élément optique (7) comprend un réseau de lentilles.

8. Dispositif selon l'une quelconque des revendications 4 à 7, dans lequel l'élément optique (7) est fabriqué dans un moule d'injection.

9. Dispositif selon l'une des revendications 4 à 8, dans lequel l'élément optique (7) présente une surface (14) orientée vers la lentille cylindrique (3), dont le contour peut être décrit par la formule

$$z(x) = \cfrac{\dfrac{x^2}{R}}{1 + \sqrt{1 - (1+k)\dfrac{x^2}{R^2}}} + \sum_{n=1}^{N} A_n \cdot x^n$$

.

**10.** Dispositif selon l'une quelconque des revendications précédentes, ledit dispositif comprenant une monture (13) dans laquelle est enchâssé le premier système de lentilles de collimation (1), ladite monture (13) comprenant de préférence des pièces en zinc moulé sous pression ou en matière plastique.

**11.** Dispositif selon la revendication 10, dans lequel le coefficient de dilatation thermique $\alpha_h$ de la monture (13) est égal au coefficient de dilatation thermique $\alpha_f$ du premier système de lentilles de collimation (1).

**12.** Dispositif selon l'une quelconque des revendications précédentes, dans lequel la lentille cylindrique (3) en verre présente une distance focale supérieure à 30 mm, de préférence comprise entre 30 et 35 mm.

**13.** Dispositif selon l'une des revendications précédentes, dans lequel l'élément de lentille asphérique (5) présente une distance focale supérieure à 200 mm.

**14.** Laser à diode (110), en particulier pour un système LIDAR, comprenant une diode laser (120), de préférence plusieurs diodes laser (120) et un dispositif (100) selon l'une des revendications précédentes.

**15.** Utilisation d'un système de lentilles de collimation (1) comprenant une lentille cylindrique (3), en particulier avec un profil au moins partiellement circulaire (4), qui est fabriquée en verre, et un élément de lentille asphérique (5), qui est fabriqué en matière plastique, pour collimater Fast Axis un champ de faisceau lumineux (L) d'au moins une diode laser (120).

**16.** Procédé de collimation d'un champ de rayons lumineux (L) qui diverge plus rapidement par rapport à la direction de rayonnement (s) dans une première direction (F) perpendiculaire à la direction de rayonnement (s) que dans une deuxième direction (S) perpendiculaire à la direction de rayonnement (s) et à la première direction (F), le champ de rayons lumineux (L) étant collimaté par au moins un premier système de lentilles de collimation (1) dans la première direction (F) et étant de préférence collimaté par au moins un deuxième système de lentilles de collimation (2) dans la deuxième direction (S), le premier système de lentilles de collimation (1) comprenant une lentille cylindrique (3), en particulier avec un profil au moins partiellement circulaire (4), qui est fabriquée en verre, **caractérisé en ce que** le premier système de lentilles de collimation (1) comprend un élément de lentille asphérique (5) qui est fabriqué en matière plastique.

**17.** Procédé de fabrication d'un dispositif (100) de collimation d'un champ de rayons lumineux (L), en particulier selon l'une des revendications 1 à 13, qui diverge plus rapidement par rapport à la direction de rayonnement (s) dans une première direction (F) perpendiculaire à la direction de rayonnement (s) que dans une deuxième direction (S) perpendiculaire à la direction de rayonnement (s) et à la première direction (F), comprenant les étapes suivantes

- Création d'au moins un premier système de lentilles de collimation (1) pour collimater le champ de rayonnement lumineux (L) dans la première direction (F), le premier système de lentilles de collimation (1) comprenant une lentille cylindrique (3), en particulier avec un profil au moins partiellement circulaire (4), qui est fabriquée en verre, et un élément de lentille asphérique (5) qui est fabriqué en plastique,
- le montage du système de lentilles de collimation (1) dans une monture.

**Fig. 1**

**Fig. 2**

**Fig. 3**

100

13

5

**Fig. 4**

100

13

3

2

**Fig. 5**

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4318594 A
- DE 60210010
- US 2012027417 A
- EP 3267233 A
- WO 2018125830 A
- EP 3267233 A2